# EUROPEAN PATENT APPLICATION

(11) **EP 4 711 132 A1**
(43) Date of publication of application: **18.03.2026**
(21) Application number: 24803463.9
(22) Date of filing: 07.05.2024
(51) Int. Cl.: B32B 27/36, B32B 7/022, B32B 27/30

(54) **LAMINATED RESIN SHEET FOR MOLDING, AND MOLDED ARTICLE USING SAME**

(30) Priority: 11.05.2023 JP 2023078572
(71) Applicant: MITSUBISHI GAS CHEMICAL COMPANY, INC., Chiyoda-ku Tokyo 100-8324 (JP)
(72) Inventor: TAKASAKI, Masato, Toyonaka-shi, Osaka 561-0823 (JP); KAWABE, Kiyoto, Toyonaka-shi, Osaka 561-0823 (JP); HIRABAYASHI, Masaki, Tokyo 125-8601 (JP); FUKUNAGA, Yasutaka, Tokyo 125-8601 (JP)
(74) Representative: Hoffmann Eitle
(86) International application number: PCT/JP2024/016944
(87) International publication number: WO 2024/232352

(57) **Abstract**

According to the present invention, there can be provided a laminated resin sheet for molding, comprising: a high-hardness resin layer comprising a high-hardness resin, a base material layer comprising a polycarbonate resin (a1), disposed on one side of the high-hardness resin layer and a hard coat layer, disposed on the other side of the high-hardness resin layer, wherein the hard coat layer has a Martens hardness of 100 to 250 (N/mm²) and an elastic deformation percentage of 40% to 64%, the hard coat layer consists of a hard coating composition, comprising: (A) a 2 to 15 functional (meth)acrylate oligomer, (B) a 1 or 2 functional (meth)acrylate monomer, having a molecular weight of less than 200 and a viscosity at 25°C of 15 cps or less, (C) a photopolymerization initiator, (D) a surface modifier, and (E) a hue improver, and the content of the hue improver (E) is 0.002 to 0.020 parts by mass, with respect to 100 parts by mass of a total of the component (A) and the component (B).

## Description

### Technical Field

The present invention relates to a laminated resin sheet for molding and a molded product using the same.

### Background Art

Resin molded bodies are used in automotive interior parts such as instrument covers, housings for home appliances, office automation equipment, personal computers and small portable devices, and touch panel-type display surfaces for mobile phone terminals. Resin molded bodies used for such intended uses are produced by molding resin sheets for molding.

Polycarbonate (PC) resin has been attracting attention as a resin suitable for the above-mentioned intended uses. PC resin is known as an engineering plastic (en-pla) that is excellent in terms of transparency, lightness and impact resistance, and is preferably applied to the above-mentioned intended uses.

For example, Patent Literature 1 describes an invention relating to a polycarbonate resin laminate with a hard coat layer for hot bending, which is characterized in that it is formed by laminating a hard coat layer on at least one surface of a polycarbonate resin. Besides, the invention described in Patent Literature 1 provides a method for producing a curved member that is excellent in terms of abrasion resistance, hot bending property, and adhesion after hot bending.

However, as in Patent Literature 1, since the outermost surface of a polycarbonate resin molded product does not have sufficient pencil hardness, the polycarbonate resin molded product is easily scratched by contact with hard materials. Thus, the polycarbonate resin molded product has been problematic in that it cannot be applied to the housings of small portable devices, which require high surface hardness, or for touch panel-type display surfaces of mobile phones, etc.

### Citation List

### Patent Literature

Patent Literature 1: WO2021/070632

### Summary of Invention

### Technical Problem

Thus, it is an object of the present invention to provide a laminated resin sheet for molding that has high hardness and scratch resistance, and also has excellent adhesion and easy moldability.

### Solution to Problem

The present inventors have conducted intensive studies directed towards achieving the above-described object, and as a result, the inventors have found that the above-described object can be achieved by the present invention as described below. Specifically, the present invention is as follows.
< 1 > A laminated resin sheet for molding, comprising:
   a high-hardness resin layer comprising a high-hardness resin,
   a base material layer comprising a polycarbonate resin (a1), disposed on one side of the high-hardness resin layer and
   a hard coat layer, disposed on the other side of the high-hardness resin layer, wherein
   the hard coat layer has a Martens hardness of 100 to 250 (N/mm²) and an elastic deformation percentage of 40% to 64%,
   the hard coat layer consists of a hard coating composition, comprising:
      (A) a 2 to 15 functional (meth)acrylate oligomer,
      (B) a 1 or 2 functional (meth)acrylate monomer, having a molecular weight of less than 200 and a viscosity at 25°C of 15 cps or less,
      (C) a photopolymerization initiator,
      (D) a surface modifier, and
      (E) a hue improver, and
   the content of the hue improver (E) is 0.002 to 0.020 parts by mass, with respect to 100 parts by mass of a total of the component (A) and the component (B).
< 2 > The laminated resin sheet for molding according to the above < 1 >, wherein the values of L* and YI measured in accordance with JIS-K-7373 are L* ≥ 90 and 0 ≤ YI ≤ 1, respectively.
< 3 > The laminated resin sheet for molding according to the above < 1 > or < 2 >, wherein the values of a* and b* measured in accordance with JIS-K-7373 are -0.4 ≤ a* ≤ 0.1 and -1 ≤ b* ≤ 0.5, respectively.
< 4 > The laminated resin sheet for molding according to any one of the above < 1 > to < 3 >, wherein the polycarbonate resin (a1) is an aromatic polycarbonate resin.
< 5 > The laminated resin sheet for molding according to the above < 4 >, wherein the aromatic polycarbonate resin comprises a constituent unit represented by the following formula (3a): 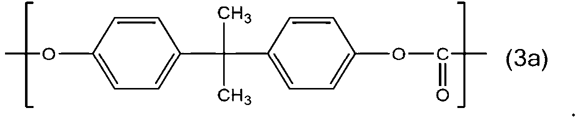
< 6 > The laminated resin sheet for molding according to any one of the above < 1 > to < 5 >, wherein the content of the polycarbonate resin (a1) is 75% to 100% by mass, with respect to the total mass of the base material layer.
< 7 > The laminated resin sheet for molding according to any one of the above < 1 > to < 6 >, wherein the content of the high-hardness resin is 70% to 100% by mass, with respect to the total mass of the high-hardness resin layer.
< 8 > The laminated resin sheet for molding according to any one of the above < 1 > to < 7 >, wherein the total thickness of the base material layer and the high-hardness resin layer is 0.5 to 3.5 mm.
< 9 > The laminated resin sheet for molding according to any one of the above < 1 > to < 8 >, wherein the percentage of the thickness of the base material layer to the total thickness of the base material layer and the high-hardness resin layer is 75% to 99%.
< 10 > The laminated resin sheet for molding according to any one of the above < 1 > to < 9 >, wherein the pencil hardness of the surface of the hard coat layer is 2H or more.
< 11 > A molded product molded using the laminated resin sheet for molding according to any one of the above < 1 > to < 10 >.

### Advantageous Effects of Invention

According to the present invention, there are provided: a laminated resin sheet for molding that has high hardness and scratch resistance, is less likely to cause appearance abnormalities during molding, and has excellent adhesion; and a resin molded product using the same.

### Brief Description of Drawings

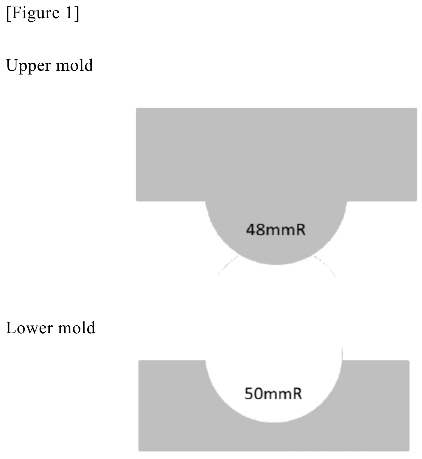

[Figure 1] Figure 1 is a schematic view of an aluminum-made hot press mold that was used when a laminated resin sheet for molding was subjected to hot press molding in the Examples.

### Description of Embodiments

Hereinafter, the present invention will be described in detail by exemplifying production examples, examples, and the like, but the present invention is not limited to the exemplified production examples, examples, and the like. The present invention can also be carried out by changing the methods described below to any methods within a range that does not greatly deviate from the contents of the present invention.

The laminated resin sheet for molding of the present invention (hereinafter simply referred to as a "resin sheet" at times) comprises a high-hardness resin layer comprising a high-hardness resin, a base material layer comprising a polycarbonate resin (a1), disposed on one side of the high-hardness resin layer, and a hard coat layer, disposed on the other side of the high-hardness resin layer. That is to say, a base material layer, a high-hardness resin layer, and a hard coat layer are disposed in this order. An additional layer may be present between the base material layer and the high-hardness resin layer, and between the high-hardness resin layer and the hard coat layer. Such an additional layer is not particularly limited, and examples thereof may include an adhesive layer and a primer layer. Such an additional layer may not be present. According to one embodiment, the base material layer, the high-hardness resin layer, and the hard coat layer are laminated on one another. That is, according to one embodiment, the laminated resin sheet for molding has a high-hardness resin layer containing a high-hardness resin, a base material layer containing a polycarbonate resin (a1) laminated on one side of the high-hardness resin layer, and a hard coat layer laminated on the other side of the high-hardness resin layer.

The high-hardness resin layer and the hard coat layer may be established on at least one side of the base material layer, and the configuration of the other side of the base material layer is not particularly limited. Otherwise, the high-hardness resin layers may also be established on both sides of the base material layer, and in such a case, the hard coat layer can be established on one or both of the high-hardness resin layer. When the high-hardness resin layers are established on both sides of the base material layer, it is desirable to use the same high-hardness resin for the two high-hardness resin layers, in order to obtain a stable resin sheet with little warping.

In the present invention, the elastic deformation percentage of the hard coat layer is 40% to 64%, preferably 45 to 60%, and more preferably 48 to 57%. Thereby, generation of appearance abnormalities such as cracks can be prevented during molding, while maintaining sufficient hardness. In the present invention, the elastic deformation percentage of the hard coat layer is a value measured using HM2000 LT manufactured by Fischer, specifically, it is a value measured using the method described in the Examples below.

In the present invention, the Martens hardness of the hard coat layer is 100 to 250 N/mm², preferably 120 to 220 N/mm², and more preferably 140 to 200 N/mm². Thereby, generation of appearance abnormalities such as cracks can be prevented during molding, while maintaining sufficient hardness. In the present invention, the Martens hardness of the hard coat layer is a value measured using HM2000 LT manufactured by Fischer, specifically, it is a value measured using the method described in the Examples below.

The aforementioned laminated resin sheet for molding can be preferably used to produce molded products having bent shapes that require high hardness. For example, since the present laminated resin sheet for molding can be successfully used to produce components each having a flat section and a continuous bent section, products with novel designs and functions can be provided using the present laminated resin sheet for molding.

When molded products with the above-described shapes have been attempted to be produced using conventional resin sheets, many defects such as crack generation during thermoforming, including hot press molding, vacuum forming, pressure forming and TOM forming, have occurred. Thus, in order to suppress crack generation during thermoforming, it has been necessary to devise measures such as reducing the hardness of the hard coat. However, when the hardness of the hard coat is reduced, although thermoformability is improved, new problems have occurred, such that the hard coat is soft and is therefore easily scratched, and such that chemical resistance is reduced.

In contrast, according to the present invention, since generation of cracks is suppressed as mentioned above, a thermoformable resin sheet can be provided without reducing the hardness of the hard coat. Since the hard coat layer established on the surface layer of the laminated resin sheet for molding of the present invention is hard, the present laminated resin sheet for molding is scratch-resistant and has high chemical resistance. Utilizing these properties, the laminated resin sheet for molding of the present invention can be used for components for display surfaces of personal computers and mobile phones, exterior and interior components for automobiles, and curved housings and front panels for mobile phone terminals, personal computers, tablet PCs, car navigation systems, etc.

Hereinafter, individual constituent elements of the resin sheet according to the present invention will be described.

### < Base material layer >

The base material layer comprises a polycarbonate resin (a1). The base material layer may further comprise other resins, additives, etc.

### (Polycarbonate resin (a1))

The polycarbonate resin (a1) is not particularly limited, as long as it contains a carbonic acid ester bond, i.e., a -[O-R-OCO]- unit (wherein R may be an aliphatic group, an aromatic group, or may comprise both an aliphatic group and an aromatic group, and may have a linear structure or a branched structure) in the molecular main chain thereof. The polycarbonate resin (a1) is preferably an aromatic polycarbonate resin, and it is particularly preferable to use a polycarbonate resin comprising a constituent unit represented by the following formula (3a):

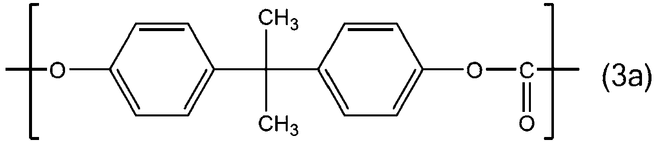

Specifically, as a polycarbonate resin (a1), an aromatic polycarbonate resin (for example, Iupilon S-2000, Iupilon S-1000, or Iupilon E-2000; manufactured by Mitsubishi Engineering-Plastics Corporation), etc. can be used.

By using such a polycarbonate resin, a resin sheet with more excellent impact resistance can be obtained.

In recent years, for the purpose of controlling the glass transition point of a polycarbonate resin, a polycarbonate resin, to which a monohydric phenol represented by the following general formula (3) has been added as an end terminator, has also been used. Also in the present invention, such an end terminator-added polycarbonate resin can be used.

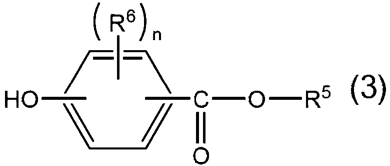

In the above formula, R⁵ represents an alkyl group containing 8 to 36 carbon atoms or an alkenyl group containing 8 to 36 carbon atoms; R⁶ each independently represents a hydrogen atom, a halogen atom, an alkyl group containing 1 to 20 carbon atoms and optionally having a substituent, or an aryl group containing 6 to 12 carbon atoms; n represents an integer of 0 to 4; wherein the substituent is halogen, an alkyl group containing 1 to 20 carbon atoms, or an aryl group containing 6 to 12 carbon. It is to be noted that, in the present description, the "alkyl group" and the "alkenyl group" may be either a linear or branched group, and may optionally have a substituent.

The monohydric phenol represented by the general formula (3) is preferably one represented by the following general formula (4).

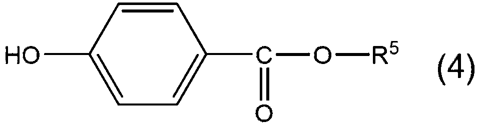

In the above formula, R⁵ represents an alkyl group containing 8 to 36 carbon atoms or an alkenyl group containing 8 to 36 carbon atoms.

In the general formula (3) or the general formula (4), the number of carbon atoms of R⁵ is more preferably within a specific numerical value range. Specifically, the upper limit value of the number of carbon atoms of R⁵ is preferably 36, more preferably 22, and particularly preferably 18. On the other hand, the lower limit value of the number of carbon atoms of R⁵ is preferably 8, and more preferably 12.

When the upper limit value of the number of carbon atoms of R⁵ in the general formula (3) or the general formula (4) is appropriate, the solubility of monohydric phenol (end terminator) in an organic solvent tends to become high, and it is preferable because it increases productivity during production of the polycarbonate resin.

As an example, if the number of carbon atoms of R⁵ is 36 or less, the productivity is high and the economic efficiency is favorable upon production of the polycarbonate resin. If the number of carbon atoms of R⁵ is 22 or less, monohydric phenol has particularly excellent solubility in organic solvents, and it enables extremely high productivity and improved economic efficiency upon production of the polycarbonate resin. The polycarbonate resin using such monohydric phenol may be, for example, Iupizeta T-1380 (manufactured by MITSUBISHI GAS

### CHEMICAL COMPANY, INC.).

When the lower limit value of the number of carbon atoms of R⁵ in the general formula (3) or the general formula (4) is appropriate, it is preferable because it prevents the glass transition point of the polycarbonate resin from becoming extremely high and the polycarbonate resin has favorable thermoformability.

For example, when monohydric phenol, wherein, in the general formula (4), R⁵ is an alkyl group containing 16 carbon atoms, is used as an end terminator, a polycarbonate resin that is excellent in terms of glass transition temperature, melt fluidity, moldability, and drawdown resistance can be obtained. Moreover, the aforementioned monohydric phenol is also excellent in terms of solvent solubility during polycarbonate resin production, and thus, is particularly preferable.

Among the monohydric phenols represented by the general formula (3) or the general formula (4), it is particularly preferable to use either parahydroxybenzoic acid hexadecyl ester or parahydroxybenzoic acid 2-hexyldecyl ester, or both of them as end terminator(s).

The weight average molecular weight of the polycarbonate resin (a1) is preferably 15,000 to 75,000, more preferably 20,000 to 70,000, and further preferably 20,000 to 65,000. When the weight average molecular weight of the polycarbonate resin (a1) is 15,000 or more, it is preferable because impact resistance can become high. On the other hand, when the weight average molecular weight thereof is 75,000 or less, it is preferable because the base material layer can be formed with a small heat source and thermal stability can be maintained even under high-temperature molding conditions. It is to be noted that, in the present description, the weight average molecular weight is a weight average molecular weight that is measured by gel permeation chromatography (GPC) and converted to standard polystyrene.

The Tg of the polycarbonate resin (a1) is preferably 90°C to 190°C, more preferably 100°C to 170°C, and further preferably 110°C to 150°C. Besides, the Tg of the polycarbonate resin (a1) can be controlled by appropriately adjusting the type and combination of constituent units of the polycarbonate resin (a1), the weight average molecular weight, etc. In addition, in the present description, the glass transition point is a temperature calculated by a midpoint method using a differential scanning calorimeter with 10 mg of a sample at a temperature-increasing rate of 10°C/min.

The polycarbonate resin (a1) comprised in the base material layer may be one type or two or more types.

The content of the polycarbonate resin (a1) in the base material layer is preferably 75% to 100% by mass, more preferably 90% to 100% by mass, and particularly preferably 100% by mass, with respect to the total mass of the base material layer. When the content of the polycarbonate resin is 75% by mass or more, it is preferable because impact resistance can be further improved.

### (Other resins)

Other resins that may be comprised in the base material layer are not particularly limited, and an example thereof may be a polyester resin.

The polyester resin preferably mainly comprises terephthalic acid as a dicarboxylic acid component, and may also comprise dicarboxylic acid components other than terephthalic acid.

For example, a polyester resin (what is called "PETG") obtained by polycondensation of glycol components containing 80 to 60 mol % of ethylene glycol as a main component and 20 to 40 mol % of 1,4-cyclohexanedimethanol (total 100 mol %) is preferable.

It is to be noted that other resins may be used alone or in combination of two or more types.

When other resins are comprised, the content of such other resins is preferably 0% to 25% by mass, more preferably 0% to 10% by mass, and particularly preferably 0% by mass, with respect to the total mass of the base material layer.

### (Additives)

As additives that may be comprised in the base material layer, additives that are generally used in resin sheets can be used. Specific examples of such additives may include an antioxidant, an anti-coloring agent, an anti-static agent, a release agent, a lubricant, a dye, a pigment, a plasticizer, a flame retardant, a resin modifier, a compatibilizer, and reinforcing materials such as an organic filler or an inorganic filler. These additives may be used alone or in combination of two or more types.

The amount of additives is preferably 0% to 10% by mass, more preferably 0% to 7% by mass, and particularly preferably 0% to 5% by mass, with respect to the total mass of the base material layer.

The method of mixing the additives and the resin is not particularly limited, and a method of compounding the entire amount, a method of dry-blending a masterbatch, a method of dry-blending the entire amount, etc. can be used.

### (Base material layer)

The thickness of the base material layer is preferably 0.3 to 3.5 mm, more preferably 0.3 to 3.0 mm, and further preferably 1.0 to 3.0 mm.

### < High-hardness resin layer >

The high-hardness resin layer comprises a high-hardness resin. It may further comprise other resins, additives, etc., as necessary. Besides, in the present description, the "high-hardness resin" means a resin having a hardness that is higher than the hardness of the polycarbonate resin serving as a base material, and the high-hardness resin means a resin having a pencil hardness of HB or higher, preferably HB to 3H, more preferably H to 3H, and further preferably 2H to 3H. It is to be noted that the pencil hardness of the high-hardness resin layer is a result obtained by evaluating the hardness by a pencil scratch hardness test in accordance with JIS K 5600-5-4: 1999. Specifically, a pencil was pressed against the surface of the high-hardness resin layer at an angle of 45 degrees with a load of 750 g, while gradually increasing hardness, and the hardness of the hardest pencil that did not leave a scratch was evaluated as a pencil hardness.

### [High-hardness resin]

The high-hardness resin is not particularly limited, and it preferably comprises at least one selected from the group consisting of resins (B1) to (B6).

### (Resin (B1))

Resin (B1) is a copolymer comprising a (meth)acrylic acid ester constituent unit (a) represented by the following general formula (1) and an aliphatic vinyl constituent unit (b) represented by the following general formula (2). In this case, the resin (B1) may further comprise other constituent units. It is to be noted that, in the present description, (meth)acryl refers to methacryl and/or acryl.

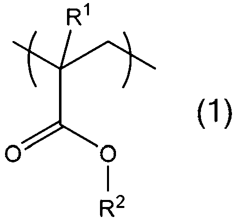

In the above formula, R¹ represents a hydrogen atom or a methyl group, and preferably represents a methyl group.

In addition, R² represents an alkyl group containing 1 to 18 carbon atoms, preferably an alkyl group containing 1 to 10 carbon atoms, and more preferably an alkyl group containing 1 to 6 carbon atoms. Specific examples thereof may include a methyl group, an ethyl group, a butyl group, a lauryl group, a stearyl group, a cyclohexyl group, and an isobornyl group. Of these, when R² preferably represents a methyl group or an ethyl group, and more preferably represents a methyl group.

Besides, when R² is a methyl group or an ethyl group, the (meth)acrylic acid ester constituent unit (a) represented by the general formula (1) becomes a (meth)acrylic acid ester constituent unit, and when R¹ is a methyl group and R² is a methyl group, the (meth)acrylic acid ester constituent unit (a) represented by the general formula (1) becomes a methyl methacrylate constituent unit.

Only one type of or two or more types of the (meth)acrylic acid ester constituent unit (a) represented by the general formula (1) may be comprised in the resin (B1).

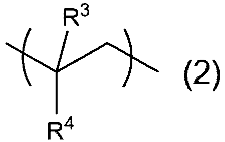

In the above formula, R³ represents a hydrogen atom or a methyl group, and preferably represents a hydrogen atom.

R⁴ represents a cyclohexyl group that may be optionally substituted with a hydrocarbon group containing 1 to 4 carbon atoms, and preferably represents an unsubstituted cyclohexyl group.

When R³ is a hydrogen atom and R⁴ is a cyclohexyl group, the aliphatic vinyl constituent unit (b) represented by the general formula (2) becomes 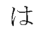 vinylcyclohexane constitutive unit.

Only one type of or two or more types of the aliphatic vinyl constituent unit (b) represented by the general formula (2) may be comprised in the resin (B1).

In the present description, the "hydrocarbon group" may be any of linear, branched, and cyclic group, and may optionally have a substituent.

The above-described other constituent units are not particularly limited, and an example thereof may be an aromatic vinyl monomer-derived constituent unit containing an unhydrogenated aromatic double bond, which is generated in the process of producing a resin (B1) by polymerizing a (meth)acrylic acid ester monomer and an aromatic vinyl monomer, and then hydrogenating an aromatic double bond derived from the aromatic vinyl monomer. A specific example of such other constituent units may be a styrene constituent unit.

Only one type of or two or more types of such other constituent units may be comprised in the resin (B1).

The total content of the (meth)acrylic acid ester constituent unit (a) and the aliphatic vinyl constituent unit (b) is preferably 90 to 100 mol %, more preferably 95 to 100 mol %, and particularly preferably 98 to 100 mol %, with respect to all constituent units of the resin (B1).

The content of the (meth)acrylic acid ester constituent unit (a) represented by the general formula (1) is preferably 65 to 80 mol %, and more preferably 70 to 80 mol %, with respect to all constituent units of the resin (B1). When the proportion of the (meth)acrylic acid ester constituent unit (a) is 65 mol % or more, it is preferable because a resin layer that is excellent in terms of adhesion to the base material layer and surface hardness can be obtained. On the other hand, the proportion of the (meth)acrylic acid ester constituent unit (a) is 80 mol % or less, it is preferable because warping due to water absorption in the resin sheet is hardly generated.

Moreover, the content of the aliphatic vinyl constituent unit (b) represented by the general formula (2) is preferably 20 to 35 mol %, and more preferably 20 to 30 mol %, with respect to all constituent units of the resin (B1). When the content of the aliphatic vinyl constituent unit (b) is 20 mol % or more, it is preferable because it can prevent warping under high temperature and high humidity conditions. On the other hand, when the content of the aliphatic vinyl constituent unit (b) is 35 mol % or less, it is preferable because delamination from the base material layer at the interface can be prevented.

Furthermore, the content of other constituent units is preferably 10 mol % or less, more preferably 5 mol % or less, and particularly preferably 2 mol % or less, with respect to all constituent units of the resin (B1).

It is to be noted that, in the present description, the "copolymer" may be any of the structures of a random copolymer, a block copolymer, and an alternating copolymer.

The weight average molecular weight of the resin (B1) is not particularly limited. From the viewpoint of strength and moldability, it is preferably 50,000 to 400,000, and more preferably 70,000 to 300,000.

The glass transition point of the resin (B1) is preferably 110°C to 140°C, more preferably 110°C to 135°C, and particularly preferably 110°C to 130°C. When the glass transition point is 110°C or higher, it is preferable because the resin sheet is less likely to deform or crack in a hot environment or in a humid and hot environment. On the other hand, When the glass transition point is 140°C or lower, it is preferable because the resin is excellent in terms of processability when it is molded by continuous thermal molding using a mirrored roll or an excipient roll, or batch thermal molding using a mirrored mold or an excipient mold.

Specific examples of the resin (B1) may include Optimas 7500 and 6000 (manufactured by MITSUBISHI GAS CHEMICAL COMPANY, INC.). The above-mentioned resin (B1) may be used alone or in combination of two or more types.

When the resin (B1) is used as a high-hardness resin, Iupizeta T-1380 (manufactured by MITSUBISHI GAS CHEMICAL COMPANY, INC.) is preferably used as a polycarbonate resin (a1).

In addition, particularly preferable is an aspect, in which a resin (B1) that is a copolymer comprising 75 mol % of the constituent unit represented by the general formula (1) (both R¹ and R² are methyl groups; methyl methacrylate) as a high-hardness resin and 25 mol % of the constituent unit represented by the general formula (2) (R³ is a hydrogen atom and R⁴ is a cyclohexyl group; vinylcyclohexane) is used, a polycarbonate resin comprising the constituent unit of the formula (3a) is used as a polycarbonate resin (a1), and the monohydric phenol represented by the general formula (4) (wherein the number of carbon atoms of R⁵ is 8 to 22) is used as an end terminator.

The method of producing the resin (B1) is not particularly limited, and a method of producing the resin (B1) by polymerizing at least one type of (meth)acrylic acid ester monomer and at least one type of aromatic vinyl monomer, and then hydrogenating an aromatic double bond derived from the aromatic vinyl monomer, is preferable.

The aromatic vinyl monomer is not particularly limited, and examples thereof may include styrene, α-methylstyrene, p-hydroxystyrene, alkoxystyrene, chlorostyrene, and their derivatives. Of these, the aromatic vinyl monomer is preferably styrene.

A known method can be used for the polymerization of the (meth)acrylic acid ester monomer and the aromatic vinyl monomer, and for example, a bulk polymerization method or a solution polymerization method can be used for production.

The bulk polymerization method is carried out by, for example, a method comprising continuously supplying a monomer composition containing the above-described monomers and a polymerization initiator into a complete mixing tank, and conducting continuous polymerization at 100°C to 180°C. The above-described monomer composition may comprise a chain transfer agent, as necessary.

The above-described polymerization initiator is not particularly limited, and examples thereof may include: organic peroxides such as t-amylperoxy-2-ethylhexanoate, t-butylperoxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexylpropoxyisopropyl monocarbonate, t-amylperoxy-n-octoate, t-butylperoxyisopropyl monocarbonate, and di-t-butyl peroxide; and azo compounds such as 2,2'-azobisisobutyronitrile, 2,2'-azobis(2-methylbutyronitrile), and 2,2'-azobis(2,4-dimethylvaleronitrile). These can be used alone or in combination of two or more types.

The above-described chain transfer agent is not particularly limited, and an example thereof may be an α-methylstyrene dimer.

Examples of the solvent used in the solution polymerization method may include: hydrocarbon solvents such as toluene, xylene, cyclohexane, and methylcyclohexane; ester solvents such as ethyl acetate and methyl isobutyrate; ketone solvents such as acetone and methyl ethyl ketone; ether solvents such as tetrahydrofuran and dioxane; and alcohol solvents such as methanol and isopropanol. These solvents may be used alone or in combination of two or more types.

The solvent used in the hydrogenation reaction of hydrogenating the aromatic double bond derived from the aromatic vinyl monomer after the polymerization of the (meth)acrylic acid ester monomer and the aromatic vinyl monomer may be identical to or different from the above-described polymerization solvent. Examples of the solvent may include: hydrocarbon solvents such as cyclohexane and methylcyclohexane; ester solvents such as ethyl acetate and methyl isobutyrate; ketone solvents such as acetone and methyl ethyl ketone; ether solvents such as tetrahydrofuran and dioxane; and alcohol solvents such as methanol and isopropanol.

The hydrogenation method is not particularly limited, and a known method can be used. For example, the reaction can be carried out by a batch system or a continuous flow system, at a hydrogen pressure of 3 to 30 MPa and a reaction temperature of 60°C to 250°C. When the reaction temperature is 60°C or higher, it is preferable because it does not take a too long reaction time. On the other hand, when the reaction temperature is 250°C or lower, it is preferable because side reactions such as molecular chain scission or hydrogenation of ester moieties do not occur or hardly occurs.

The catalyst used in the hydrogenation reaction may be, for example, a solid catalyst, in which a metal such as nickel, palladium, platinum, cobalt, ruthenium or rhodium, or the oxide, salt, or complex compound of such a metal is supported on a porous support such as carbon, alumina, silica, silica-alumina or diatomaceous earth.

It is preferable that 70% or more of the aromatic double bonds derived from the aromatic vinyl monomer are hydrogenated by the hydrogenation reaction. That is, the unhydrogenation percentage of aromatic double bonds contained in constituent units derived from the aromatic vinyl monomers is preferably less than 30%, more preferably less than 10%, and further preferably less than 5%. When the unhydrogenation percentage is less than 30%, it is preferable because a resin with excellent transparency can be obtained. It is to be noted that the constituent units in the unhydrogenated portions can become other constituent units in the resin (B1).

### (Resin (B2))

Resin (B2) is a copolymer comprising 6% to 77% by mass of a (meth)acrylic acid ester constituent unit, 15% to 71% by mass of a styrene constituent unit, and 8% to 23% by mass of an unsaturated dicarboxylic acid constituent unit. In this case, the resin (B2) may further comprise other constituent units.

The (meth)acrylic acid ester monomer that constitutes the (meth)acrylic acid ester constituent unit in the resin (B2) is not particularly limited, and examples thereof may include acrylic acid, methyl acrylate, ethyl acrylate, n-butyl acrylate, 2-ethylhexyl acrylate, methacrylic acid, methyl methacrylate, ethyl methacrylate, n-butyl methacrylate, and 2-ethylhexyl methacrylate. Of these, the (meth)acrylic acid ester monomer is preferably methyl methacrylate. The aforementioned (meth)acrylic acid ester monomer may be comprised alone as a (meth)acrylic acid ester constituent unit, or may also be comprised in combination of two or more types.

The content of the (meth)acrylic acid ester constituent unit is 6% to 77% by mass, and preferably 20% to 70% by mass, with respect to the total mass of the resin (B2).

The styrene constituent unit in the resin (B2) is not particularly limited, and any known styrene-based monomer can be used. From the viewpoint of easy availability, examples of the styrene-based monomer include styrene, α-methylstyrene, o-methylstyrene, m-methylstyrene, p-methylstyrene, and t-butylstyrene. Of these, from the viewpoint of compatibility, the styrene-based monomer is preferably styrene. The aforementioned styrene-based monomer may be comprised alone as a styrene constituent unit, or may also be comprised in combination of two or more types.

The content of the styrene constituent unit is 15% to 71% by mass, and preferably 20% to 66% by mass, with respect to the total mass of the resin (B2).

The unsaturated dicarboxylic acid anhydride monomer that constitutes the unsaturated dicarboxylic acid constituent unit in the resin (B2) is not particularly limited, and examples thereof may include anhydrides of acids such as maleic acid, itaconic acid, citraconic acid, and aconitic acid. Of these, from the viewpoint of compatibility with the styrene-based monomer, the unsaturated dicarboxylic acid anhydride monomer is preferably maleic anhydride. The aforementioned unsaturated dicarboxylic acid anhydride monomer may be comprised alone as an unsaturated dicarboxylic acid constituent unit, or may also be comprised in combination of two or more types.

The content of the unsaturated dicarboxylic acid constituent unit is 8% to 23% by mass, and preferably 10% to 23% by mass, with respect to the total mass of the resin (B2).

Other constituent units in the resin (B2) may be, for example, N-phenylmaleimide.

The content of other constituent units is preferably 10 mol % or less, more preferably 5 mol % or less, and particularly preferably 2 mol % or less, with respect to all constituent units of the resin (B2).

The total content of the above-mentioned (meth)acrylic acid ester constituent unit, styrene constituent unit, and unsaturated dicarboxylic acid constituent unit is preferably 90 to 100 mol %, more preferably 95 to 100 mol %, and particularly preferably 98 to 100 mol %, with respect to all constituent units of the resin (B2).

The weight average molecular weight of the resin (B2) is not particularly limited, and it is preferably 50,000 to 300,000, and more preferably 80,000 to 200,000.

The glass transition point of the resin (B2) is preferably 90°C to 150°C, more preferably 100 to 150°C, and particularly preferably 115°C to 150°C.

Specific examples of the resin (B2) may include Regisphi R100, R200, and R310 (manufactured by Denka Company Limited ), Delpet 980N (manufactured by Asahi Kasei Corporation), and hw55 (manufactured by Daicel Evonik). It is to be noted that the aforementioned resin (B2) may be used alone or in combination of two or more types.

When the resin (B2) is used as a high-hardness resin, an aspect, in which the polycarbonate resin comprising the constituent unit of the formula (3a) is used as a polycarbonate resin (a1), is preferable. Furthermore, an aspect, in which the monohydric phenol represented by the general formula (4) (wherein the number of carbon atoms of R⁵ is 8 to 22) is used as an end terminator, is particularly preferable. Examples of such a polycarbonate resin may include Iupizeta T-1380 (manufactured by MITSUBISHI GAS CHEMICAL COMPANY, INC.) and Iupilon E-2000 (manufactured by Mitsubishi Engineering-Plastics Corporation).

Moreover, when the resin (B2) that is a copolymer (R100 or R200; manufactured by Denka Company Limited) comprising 6% to 26% by mass of a methyl methacrylate constituent unit, 55% to 21% by mass of a styrene constituent unit, and 15% to 23% by mass of a maleic anhydride constituent unit is used as a high-hardness resin, an aspect of using Iupizeta T-1380 as a polycarbonate resin (a1) is preferable.

Furthermore, when the resin (B2) that is a copolymer (R310; manufactured by Denka Company Limited) comprising 6% by mass of a methyl methacrylate constituent unit, 71% by mass of a styrene constituent unit, and 23% by mass of a maleic anhydride constituent unit is used as a high-hardness resin, an aspect of using Iupizeta T-1380 as a polycarbonate resin (a1) is particularly preferable.

Besides, the method of producing the resin (B2) is not particularly limited, and examples thereof may include a bulk polymerization method and a solution polymerization method.

### (Resin (B3))

Resin (B3) is a polymer comprising a constituent unit (c) represented by the following formula (5). In this case, it is preferable that the polymer further comprises a constituent unit (d) represented by the following formula (6). In addition, the polymer may further comprise other constituent units.

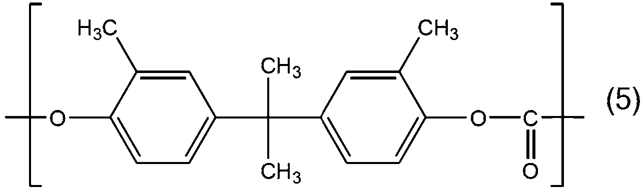

The content of the constituent unit (c) represented by the formula (5) is preferably 50 to 100 mol %, more preferably 60 to 100 mol %, and particularly preferably 70 to 100 mol %, with respect to all constituent units of the resin (B3).

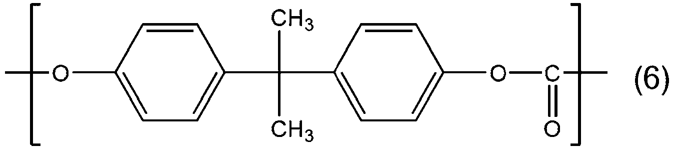

The content of the constituent unit (d) represented by the formula (6) is preferably 0 to 50 mol %, more preferably 0 to 40 mol %, and particularly preferably 0 to 30 mol %, with respect to all constituent units of the resin (B3).

The content of other constituent units is preferably 10 mol % or less, more preferably 5 mol % or less, and particularly preferably 2 mol % or less, with respect to all constituent units of the resin (B3).

The total content of the constituent unit (c) and the constituent unit (d) is preferably 90 to 100 mol %, more preferably 95 to 100 mol %, and further preferably 98 to 100 mol %, with respect to all constituent units of the resin (B3).

The weight average molecular weight of the resin (B3) is preferably 15,000 to 75,000, more preferably 20,000 to 70,000, and particularly preferably 25,000 to 65,000.

The glass transition point of the resin (B3) is preferably 105°C to 150°C, more preferably 110 to 140°C, and particularly preferably 110°C to 135°C.

Specific example of the resin (B3) may include Iupilon KH3410UR, KH3520UR, and KS3410UR (manufactured by Mitsubishi Engineering-Plastics Corporation). Besides, the aforementioned resin (B3) may be used alone or in combination of two or more types.

When the resin (B3) is used as a high-hardness resin, an aspect of using the polycarbonate resin comprising the constituent unit of the formula (3a) as a polycarbonate resin (a1) is preferable. Furthermore, , an aspect of using the monohydric phenol represented by the general formula (4) (wherein the number of carbon atoms of R⁵ is 8 to 22) as an end terminator is particularly preferable. An example of such a polycarbonate resin may be Iupizeta T-1380 (manufactured by MITSUBISHI GAS CHEMICAL COMPANY, INC.). It is particularly preferable that Iupilon KS3410UR (manufactured by Mitsubishi Engineering-Plastics Corporation) is used as a resin (B3), and that Iupizeta T-1380 (manufactured by MITSUBISHI GAS CHEMICAL COMPANY, INC.) is used as a polycarbonate resin (a1).

Besides, when the resin (B3) is used as a high-hardness resin, it is preferable to comprise another resin other than the resins (B1) to (B6). In this case, such another resin other than the resins (B1) to (B6) is preferably a resin that does not comprise the constituent unit (c) and comprises the constituent unit (d), and more preferably a resin only consisting of the constituent unit (d). Specifically, aromatic polycarbonate resins (for example, Iupilon S-2000, Iupilon S-1000, and Iupilon E-2000; manufactured by Mitsubishi Engineering-Plastics Corporation), etc. can be used.

When the high-hardness resin layer comprises another resin other than the resins (B1) to (B6), the resin (B3) is comprised in a percentage of preferably 45% by mass or more, and more preferably 55% by mass or more, with respect to all resins comprised in the high-hardness resin layer.

The method of producing the resin (B3) is not particularly limited, and the resin (B3) can be produced by the same method as the method of producing the polycarbonate resin (a1) mentioned above, with the exception of using bisphenol C as a monomer.

### (Resin (B4))

Resin (B4) is a copolymer comprising 5% to 20% by mass of a styrene constituent unit, 60% to 90% by mass of a (meth)acrylic acid ester constituent unit, and 5% to 20% by mass of an N-substituted maleimide constituent unit. Besides, the resin (B4) may further comprise other constituent units.

The styrene constituent unit in the resin (B4) is not particularly limited, and any known styrene-based monomer can be used. From the viewpoint of easy availability, examples of the styrene-based monomer may include styrene, α-methylstyrene, o-methylstyrene, m-methylstyrene, p-methylstyrene, and t-butylstyrene. Of these, from the viewpoint of compatibility, the styrene-based monomer is preferably styrene. The aforementioned styrene-based monomer may be comprised alone as a styrene constituent unit, or may also be comprised in combination of two or more types.

The content of the styrene constituent unit is 5% to 20% by mass, preferably 5% to 15% by mass, and more preferably 5% to 10% by mass, with respect to the total mass of the resin (B4).

The (meth)acrylic acid ester monomer that constitutes the (meth)acrylic acid ester constituent unit in the resin (B4) is not particularly limited, and examples thereof may include acrylic acid, methyl acrylate, ethyl acrylate, n-butyl acrylate, 2-ethylhexyl acrylate, methacrylic acid, methyl methacrylate, ethyl methacrylate, n-butyl methacrylate, and 2-ethylhexyl methacrylate. Of these, the (meth)acrylic acid ester monomer is preferably methyl methacrylate. The aforementioned (meth)acrylic acid ester monomer may be comprised alone as a (meth)acrylic acid ester constituent unit, or may also be comprised in combination of two or more types.

The content of the (meth)acrylic acid ester constituent unit is 60% to 90% by mass, preferably 70% to 90% by mass, and more preferably 80% to 90% by mass, with respect to the total mass of the resin (B4).

Examples of the N-substituted maleimide constituent unit in the resin (B4) may include constituent units derived from N-arylmaleimides, etc., such as N-phenylmaleimide, N-chlorophenylmaleimide, N-methylphenylmaleimide, N-naphthylmaleimide, N-hydroxyphenylmaleimide, N-methoxyphenylmaleimide, N-carboxyphenylmaleimide, N-nitrophenylmaleimide, and N-tribromophenylmaleimide. Of these, from the viewpoint of compatibility with acrylic resins, the constituent unit derived from N-phenylmaleimide is preferable. The aforementioned constituent unit derived from N-substituted maleimide may be comprised alone as an N-substituted maleimide constituent unit, or may also be comprised in combination of two or more types.

The content of the N-substituted maleimide constituent unit is 5% to 20% by mass, preferably 5% to 15% by mass, and more preferably 5% to 10% by mass, with respect to the total mass of the resin (B4).

Examples of other constituent units described above may include the (meth)acrylic acid ester constituent unit represented by the general formula (1) and the aliphatic vinyl constituent unit represented by the general formula (2). In this case, the above general formula (1) and the above general formula (2) are the same as those for the resin (B1) mentioned above.

The content of other constituent units is preferably 10 mol % or less, more preferably 5 mol % or less, and particularly preferably 2 mol % or less, with respect to all constituent units of the resin (B4).

The total content of the styrene constituent unit, the (meth)acrylic acid ester constituent unit, and the N-substituted maleimide constituent unit is preferably 90 to 100 mol %, more preferably 95 to 100 mol %, and further preferably 98 to 100 mol %, with respect to all constituent units of the resin (B4).

The weight average molecular weight of the resin (B4) is preferably 50,000 to 250,000, and more preferably 100,000 to 200,000.

The glass transition point of the resin (B4) is preferably 110°C to 150°C, more preferably 115°C to 140°C, and particularly preferably 115°C to 135°C.

A specific example of the resin (B4) may be Delpet PM120N (manufactured by Asahi Kasei Corporation). Besides, the aforementioned resin (B4) may be used alone or in combination of two or more types.

When the resin (B4) is used as a high-hardness resin, an aspect of using the polycarbonate resin comprising the constituent unit of the formula (3a) as a polycarbonate resin (a1) is preferable. Furthermore, an aspect of using the monohydric phenol represented by the general formula (4) (wherein the number of carbon atoms of R5 is 8 to 22) as an end terminator is particularly preferable. An example of such a polycarbonate resin may be Iupizeta T-1380 (manufactured by MITSUBISHI GAS CHEMICAL COMPANY, INC.). It is particularly preferable to use, as a resin (B4), Delpet PM-120N consisting of 7% by mass of the styrene constituent unit, 86% by mass of the (meth)acrylic acid ester constituent unit, and 7% by mass of the N-substituted maleimide constituent unit, and to use Iupizeta T-1380 as a polycarbonate resin (a1).

The method of producing the resin (B4) is not particularly limited, and the resin (B4) can be produced by solution polymerization, bulk polymerization, etc.

### (Resin (B5))

Resin (B5) is a polymer comprising a constituent unit (e) represented by the following formula (7). In this case, the resin (B5) may further comprise other constituent units.

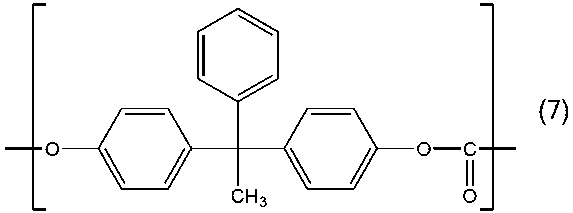

The content of the constituent unit (e) represented by the formula (7) is preferably 80 to 100 mol %, more preferably 90 to 100 mol %, and particularly preferably 95 to 100 mol %, with respect to all constituent units of the resin (B5).

Examples of other constituent units may include the constituent unit represented by the formula (5) and the constituent unit represented by the formula (6). In this case, the above formula (5) and the above formula (6) are the same as those for the aforementioned resin (B3).

The content of other constituent units is preferably 20 mol % or less, more preferably 10 mol % or less, and particularly preferably 5 mol % or less, with respect to all constituent units of the resin (B5).

The weight average molecular weight of the resin (B5) is preferably 10,000 to 1,000,000, and more preferably 15,000 to 50,000.

The glass transition point of the resin (B5) is preferably 120°C to 200°C, more preferably 130 to 190°C, and particularly preferably 140°C to 190°C.

A specific example of the resin (B5) may be Iupizeta FPC0220 (manufactured by MITSUBISHI GAS CHEMICAL COMPANY, INC.). Besides, the aforementioned resin (B5) may be used alone or in combination of two or more types.

When the resin (B5) is used as a high-hardness resin, an aspect of using the polycarbonate resin comprising the constituent unit of the formula (3a) as a polycarbonate resin (a1) is preferable. Such a polycarbonate resin may be Iupilon E-2000 (manufactured by Mitsubishi Engineering-Plastics Corporation). It is particularly preferable that Iupizeta FPC0220 (manufactured by MITSUBISHI GAS CHEMICAL COMPANY, INC.) is used as a resin (B5), and that Iupilon E-2000 (manufactured by Mitsubishi Engineering-Plastics Corporation) is used as a polycarbonate resin (a1).

When the resin (B5) is used as a high-hardness resin, it is preferable to comprise another resin other than the resins (B1) to (B6). In this case, such another resin other than the resins (B1) to (B6) is preferably a resin that does not comprise the constituent unit (c) and comprises the constituent unit (d), and more preferably a resin only consisting of the constituent unit (d). Specifically, aromatic polycarbonate resins (for example, Iupilon S-2000, Iupilon S-1000, and Iupilon E-2000; manufactured by Mitsubishi Engineering-Plastics Corporation), etc. can be used.

When the high-hardness resin layer comprises another resin other than the resins (B1) to (B6), the resin (B5) is comprised in a percentage of preferably 45% by mass or more, and more preferably 55% by mass or more, with respect to all resins comprised in the high-hardness resin layer.

The method of producing the resin (B5) is not particularly limited, and the resin (B3) can be produced by the same method as the method of producing the polycarbonate resin (a1) mentioned above, with the exception of using bisphenol AP as a monomer.

### (Resin (B6))

Resin (B6) is a copolymer comprising 50% to 95% by mass of a styrene constituent unit and 5% to 50% by mass of an unsaturated dicarboxylic acid constituent unit.

As such a styrene constituent unit, the styrene-based monomer described for the resin (B4) can be used. For the resin (B6), these styrene constituent units may be used alone or in combination of two or more types.

The content of the styrene constituent unit is preferably 50% to 95% by mass, more preferably 60% to 90% by mass, and further preferably 65% to 87% by mass, with respect to the total mass of the resin (B6).

Examples of the unsaturated dicarboxylic acid anhydride monomer that constitutes the unsaturated dicarboxylic acid constituent unit may include anhydrides of acids such as maleic acid, itaconic acid, citraconic acid, and aconitic acid. Of these, from the viewpoint of compatibility with the styrene-based monomer, maleic anhydride is preferable. Besides, the aforementioned unsaturated dicarboxylic acid anhydride monomer may be used alone or in combination of two or more types.

The content of the unsaturated dicarboxylic acid constituent unit is preferably 5% to 50% by mass, more preferably 10% to 40% by mass, and further preferably 13% to 35% by mass, with respect to the total mass of the resin (B6).

The resin (B6) may comprise constituent unit other than the above-described constituent units. Examples of such other constituent units may include the constituent unit represented by the following general formula (1) and the constituent unit represented by the following general formula (2): 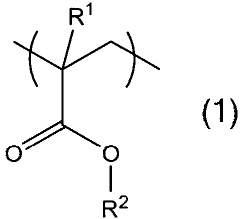 wherein R¹ and R² are the same as those described above. 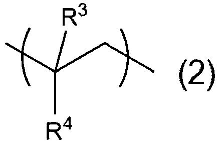 wherein R³ and R⁴ are the same as those described above.

The content of other constituent units is preferably 10 mol % or less, more preferably 5 mol % or less, and further preferably 2 mol % or less, with respect to all constituent units of the resin (B6).

The weight average molecular weight of the resin (B6) is preferably 50,000 to 250,000, and more preferably 50,000 to 100,000.

The glass transition point of the resin (B6) is preferably 110°C to 150°C, more preferably 120°C to 150°C, and particularly preferably 130°C to 150°C.

Specific examples of the resin (B6) may include XIBOND 140 and XIBOND 160 (manufactured by Polyscope Co., Ltd.). Besides, the aforementioned resin (B6) may be used alone or in combination of two or more types.

When the resin (B6) is used as a high-hardness resin, an aspect of using the polycarbonate resin comprising the constituent unit of the formula (3a) as a polycarbonate resin (a1) is preferable. Furthermore, , an aspect of using the monohydric phenol represented by the general formula (4) (wherein the number of carbon atoms of R⁵ is 8 to 22) as an end terminator is particularly preferable. An example of such a polycarbonate resin may be Iupizeta T-1380 (manufactured by MITSUBISHI GAS CHEMICAL COMPANY, INC.). It is particularly preferable that an alloy of XIBOND 160 consisting of 78% by mass of the styrene constituent unit and 22% by mass of the maleic anhydride constituent unit and an acrylic acid is used as a resin (B6), and that Iupizeta T-1380 is used as a polycarbonate resin (a1).

The method of producing the resin (B6) is not particularly limited, and the resin (B6) can be produced by solution polymerization, bulk polymerization, etc.

At least one selected from the group consisting of the aforementioned resins (B1) to (B6) may be contained as an alloy.

The above-described alloy is not particularly limited, and examples thereof may include an alloy of two types of the resins (B1), an alloy of two types of the resins (B2), an alloy of two types of the resins (B3), an alloy of two types of the resins (B4), an alloy of two types of the resins (B5), an alloy of two types of the resins (B6), an alloy of the resin (B1) and the resin (B2), an alloy of the resin (B2) and the resin (B4), an alloy of the resin (B2) and another high-hardness resin, an alloy of the resin (B2) and an acrylic resin, and an alloy of the resin (B6) and an acrylic resin.

Examples of the above-described other high-hardness resins may include a methyl methacrylate-styrene copolymer and an acrylonitrile-butadiene-styrene copolymer.

Examples of the acrylic resin may include polymethyl methacrylate and a copolymer of methyl methacrylate and methyl acrylate or ethyl acrylate. Examples of the commercially available product thereof may include ACRYPET (manufactured by Mitsubishi Chemical Corporation), SUMIPEX (manufactured by Sumitomo Chemical Company, Limited), and PARAPET (manufactured by Kuraray Co., Ltd.).

When an alloy of two types of resins is used, it is preferable to use an alloy of resins with higher glass transition temperatures. Besides, the aforementioned alloys may be used alone or in combination of two or more types.

The method for producing an alloy is not particularly limited, and it may be, for example, a method comprising melt-kneading raw materials at a cylinder temperature of 240°C using a twin-screw extruder with a screw diameter of 26 mm, extruding the mixture into strands, and pelletizing them using a pelletizer.

The high-hardness resin comprised in the high-hardness resin layer may be one type, or two or more types. When two or more types are selected from the resins (B1) to (B6), the resins can be selected from the same or different categories. Furthermore, the high-hardness resin layer may further comprise high-hardness resins other than the resins (B1) to (B6).

The content of the high-hardness resin in the high-hardness resin layer is preferably 70% to 100% by mass, more preferably 80% to 100% by mass, and particularly preferably 100% by mass, with respect to the total mass of the high-hardness resin layer.

### [Other resins]

The high-hardness resin layer may comprise other resins other than the high-hardness resin. Examples of such other resins may include a methyl methacrylate-styrene copolymer, polymethyl methacrylate, polystyrene, polycarbonate, a cycloolefin (co)polymer resin, an acrylonitrile-styrene copolymer, an acrylonitrile-butadiene-styrene copolymer, and various types of elastomers. Such other resins may be used alone or in combination of two or more types.

The content of other resins is preferably 30% by mass or less, more preferably 20% by mass or less, and particularly preferably 0% by mass, with respect to the total mass of the high-hardness resin layer.

### [Additives]

The high-hardness resin layer may comprise additives, etc. As such additives, those mentioned above can be used.

### [High-hardness resin layer]

The thickness of the high-hardness resin layer is preferably 10 to 250 µm, more preferably 30 to 200 µm, and particularly preferably 60 to 150 µm. When the thickness of the high-hardness resin layer is 10 µm or more, it is preferable because the surface hardness becomes high. On the other hand, when the thickness of the high-hardness resin layer is 250 µm or less, it is preferable because the impact resistance becomes high.

### [Lamination of high-hardness resin layer on base material layer]

As mentioned above, an additional layer may be present between the base material layer and the high-hardness resin layer. Herein, a case of laminating the high-hardness resin layer on the base material layer will be described.

The method of laminating the high-hardness resin layer on the base material layer is not particularly limited. Examples of the lamination method may include: a method comprising laminating on each other, a base material layer and a high-hardness resin layer, which have been formed separately, and then thermocompressing them; a method comprising laminating on each other, a base material layer and a high-hardness resin layer, which have been formed separately, and then bonding them with an adhesive; a method of subjecting a base material layer and a high-hardness resin layer to co-extrusion molding; and a method comprising in-mold molding a base material layer into a previously formed high-hardness resin layer for integration. Among these, from the viewpoint of production costs and productivity, a co-extrusion molding method is preferable.

The co-extrusion method is not particularly limited. For example, in a feedblock method, a high-hardness resin layer is placed on one surface of a base material layer in a feedblock, is then extruded into a sheet through a T-die, and is then cooled, while passing through forming rolls, to form a desired laminate. In a multi-manifold method, a high-hardness resin layer is placed on one surface of a base material layer in a multi-manifold die, is then extruded into a sheet, and is then cooled, while passing through forming rolls, to form a desired laminate.

It is to be noted that the above-described methods can also be used to laminate a high-hardness resin layer on a layer other than the base material layer by the same methods.

The total thickness of a base material layer and a high-hardness resin layer is preferably 0.5 to 3.5 mm, more preferably 0.5 to 3.0 mm, and further preferably 1.2 to 3.0 mm. When the total thickness is 0.5 mm or more, it is preferable because the rigidity of the sheet can be maintained. On the other hand, when the total thickness is 3.5 mm or less, it is preferable because deterioration in the sensitivity of a touch sensor can be prevented, when a touch panel is installed underneath the sheet.

The percentage of the thickness of a base material layer to the total thickness of a base material layer and a high-hardness resin layer is preferably 75% to 99%, more preferably 80% to 99%, and particularly preferably 85% to 99%. By setting the percentage within the above-described range, both hardness and impact resistance can be achieved.

### < Hard coat layer >

In the present description, "hard coat" means a coating film formed by polymerizing a hard coating composition comprising a monomer or an oligomer or a prepolymer, containing a (meth)acryloyl group as a polymerization group, to form a crosslinked structure.

In the present invention, the hard coating composition comprises (A) a 2 to 15 functional (meth)acrylate oligomer, (B) a 1 or 2 functional (meth)acrylate monomer having a molecular weight of less than 200 and a viscosity at 25°C of 15 cps or less, (C) a photopolymerization initiator, (D) a surface modifier, and (E) a hue improver. It is to be noted that, in the present description, the photopolymerization initiator refers to a photoradical generator.

The content of the (meth)acrylate oligomer as a component (A) is preferably 40% to 80% by mass, more preferably 50% to 75% by mass, and particularly preferably55% to 75% by mass, with respect to the total content of the above component (A) and component (B).

The content of the (meth)acrylate monomer as a component (B) is preferably 20% to 60% by mass, more preferably 25% to 50% by mass, and particularly preferably 25% to 45% by mass, with respect to the total content of the above component (A) and component (B).

The content of the photopolymerization initiator as a component (C) is preferably 0.1 to 10 parts by mass, more preferably 0.5 to 7 parts by mass, and particularly preferably 1 to 5 parts by mass, with respect to 100 parts by mass of a total of the component (A) and the component (B).

The content of the surface modifier as a component (D) is preferably 0.1 to 10 parts by mass, more preferably 0.5 to 7 parts by mass, and particularly preferably 1 to 5 parts by mass, with respect to 100 parts by mass of a total of the component (A) and the component (B).

The content of the hue improver as a component (E) is 0.002 to 0.020 parts by mass, preferably 0.003 to 0.018 parts by mass, and more preferably 0.005 to 0.015 parts by mass, with respect to 100 parts by mass of a total of the component (A) and the component (B).

### < Component (A) > [(Meth)acrylate oligomer]

The (meth)acrylate oligomer, which is the component (A) used in the present invention, is a multifunctional (meth)acrylate oligomer having 2 to 15 functional units, preferably 2 to 9 functional units, and more preferably 2 to 6 functional units. The oligomer means herein a polymer having preferably 2 or more constituent units, and more preferably about 2 to 20 constituent units, in which the lower limit value of the molecular weight thereof is about 400 or more, and more preferably 1200 or more. The upper limit value of the molecular weight of the oligomer is preferably 6000 or less, and more preferably 4000 or less.

Specific examples of the component (A) may include the multifunctional (meth)acrylate oligomers (1) to (4) shown below:
(1) a multifunctional polyol (meth)acrylate oligomer, i.e., an oligomer of polyacrylate or polymethacrylate, obtained by reacting a polyhydric alcohol (polyol or polyhydroxy-containing compound) with a compound selected from the group consisting of acrylic acid, methacrylic acid, and their derivatives;
(2) a multifunctional polyester (meth)acrylate oligomers, i.e., an oligomer of polyacrylate or polymethacrylate of a saturated or unsaturated polyester, which is obtained from a polyhydric alcohol (polyol), a polyvalent carboxylic acid (polybasic acid or polybasic carboxylic acid) or its anhydride, and acrylic acid, methacrylic acid, or their derivatives;
(3) a multifunctional urethane (meth)acrylate oligomer, i.e., an oligomer of urethane polyacrylate or urethane polymethacrylate, which is obtained from polyisocyanate and a compound having active hydrogen and an acryloyloxy group or a methacryloyloxy group; and
(4) a multifunctional polyglycidyl ether (meth)acrylate oligomer, i.e., an oligomer of polyacrylate or polymethacrylate, which is obtained from polyglycidyl ether, and acrylic acid, methacrylic acid, or their derivatives.

Examples of the polyhydric alcohol (polyol) used in the production of the multifunctional polyol (meth)acrylate oligomer in above (1) may include dihydric alcohols such as ethylene glycol, diethylene glycol, triethylene glycol, tetraethylene glycol, polyethylene glycol with a number-average molecular weight of 300 to 1000, propylene glycol, dipropylene glycol, 1,3-propanediol, 1,4-butanediol, 1,5-pentanediol, 1,6-hexanediol, neopentyl glycol, 2-ethyl-1,3-hexanediol, 2,2'-thiodiethanol, and 1,4-cyclohexanedimethanol; trihydric alcohols such as trimethylolethane, trimethylolpropane, pentaglycerol, glycerol, 1,2,4-butanetriol, and 1,2,6-hexanetriol; and tetrahydric or higher alcohols such as pentaerythritol, diglycerol, and dipentaerythritol.

The multifunctional polyester (meth)acrylate oligomer in above (2) can be obtained by reacting (meth)acrylic acid, polybasic carboxylic acid (anhydride), and polyol (a polyhydroxy-containing compound or polyhydric alcohol). More specifically, polyester polyol is produced by a dehydration condensation reaction between dibasic carboxylic acid (anhydride) and polyol, and this reaction product is then reacted with acrylic acid or methacrylic acid, so that a multifunctional polyester (meth)acrylate oligomer can be obtained.

The polyhydroxy-containing compound, also referred to as "polyol," used in the production of polyester polyol is preferably a compound having 3 or more hydroxy groups. In general, the polyol that can be used in the present invention is a compound having 3 to 6 hydroxy groups, preferably 3 or 4 hydroxy groups, and 2 to about 36 carbon atoms. Examples of such polyol may include branched or straight-chain aliphatic polyol, alicyclic polyol, aromatic polyol, and polyether polyol.

Examples of the aliphatic polyol may include: triols, such as glycerin, trimethylolpropane, and trimethylolethane; tetraols, such as pentaerythritol and ditrimethylolpropane; and hexaols, such as dipentaerythritol.

Furthermore, aliphatic and alicyclic polyols are reacted with various amounts of ethylene oxide and/or propylene oxide, so that ethoxylated and/or propoxylated polyols can be obtained. Examples of the ethoxylated and/or propoxylated polyols may include ethoxylated trimethylolpropane, propoxylated trimethylolpropane, ethoxylated glycerin, propoxylated glycerin, ethoxylated pentaerythritol, and propoxylated pentaerythritol.

An example of the aromatic polyol may be bisphenol A diacrylate.

Both aromatic polyether and aliphatic polyether can be used as polyether polyols in the present invention. The aliphatic group of the polyether polyol may be a straight-chain, branched-chain, or cyclic group. Examples of the polyether polyol may include triglycols such as triethylene glycol, polyethylene glycol, polypropylene glycol, polybutylene glycol, and mixed polyethers, such as poly(propylene-ethylene) glycol.

Examples of the dibasic carboxylic acid (anhydride) used in the production of the polyester polyol may include: aliphatic dicarboxylic acids such as malonic acid, succinic acid, glutaric acid, adipic acid, and sebacic acid; alicyclic dicarboxylic acids such as tetrahydrophthalic acid and 3,6-endomethylenetetrahydrophthalic acid; aromatic dicarboxylic acids such as phthalic acid, isophthalic acid, and terephthalic acid; trimellitic acid; pyromellitic acid; thiodiglycolic acid; thiodivaleric acid; diglycolic acid; and unsaturated dicarboxylic acids such as maleic acid, fumaric acid, and itaconic acid. Their chlorides, anhydrides, or esters can also be used. Anhydrides of these dibasic carboxylic acids are preferable. Alicyclic dicarboxylic anhydrides such as tetrahydrophthalic anhydride are particularly preferable.

The polyester polyol is polyol having an ester bond. For example, an excessive amount of polyol is reacted with a dibasic acid (anhydride) to produce a low-molecular-weight compound having about 1 to about 6 ester bonds and reactive hydroxy groups. Using either the above-described polyol alone or a mixture comprising the polyol, polyester polyol can be produced.

The polyester polyol is further reacted with various amounts of ethylene oxide and/or propylene oxide, so that ethoxylated and/or propoxylated polyester polyol can also be obtained.

The above-described (2) multifunctional polyester (meth)acrylate oligomer used in the present invention can be obtained by reacting the thus obtained polyester polyol with a compound selected from the group consisting of acrylic acid, methacrylic acid, and their derivatives.

Among the compounds selected from the group consisting of acrylic acid, methacrylic acid, and their derivatives, it is more preferable to use acrylic acid.

In the above-described (2) multifunctional polyester (meth)acrylate oligomer, the polyol (polyhydroxy-containing compound) can be used alone or in combination with other polyhydroxy-containing compounds. Furthermore, the compounds selected from the group consisting of acrylic acid, methacrylic acid, and their derivatives can be used alone or in combination with one another. When a mixture of polyhydroxy-containing compounds is used, a mixed ester product is obtained. Similarly, when a mixture of acrylic acid and methacrylic acid is used, the product becomes a mixed acrylate oligomer.

A preferred polyester (meth)acrylate oligomer is a 2- to 4-functional acrylate oligomer obtained by an esterification reaction of tetrahydrophthalic anhydride, trimethylolpropane, and acrylic acid according to an ordinary method.

Examples of the above-described (3) multifunctional urethane (meth)acrylate oligomer may include a urethane reaction product of a (meth)acrylate monomer having at least one (meth)acryloyloxy group and a hydroxyl group in a single molecule thereof with a polyisocyanate, and a urethane reaction product of an isocyanate compound obtained by reacting a polyol with a polyisocyanate, with a (meth)acrylate monomer having at least one (meth)acryloyloxy group and a hydroxyl group in a single molecule thereof.

In the production of the multifunctional urethane (meth)acrylate oligomer, examples of the polyisocyanate used in the urethane reaction may include hexamethylene diisocyanate, lysine diisocyanate, isophorone diisocyanate, dicyclohexylmethane diisocyanate, tolylene diisocyanate, xylylene diisocyanate, diisocyanates obtained by hydrogenating aromatic isocyanates (e.g., diisocyanates such as hydrogenated tolylene diisocyanate and hydrogenated xylylene diisocyanate), di- or tri-isocyanates such as triphenylmethane triisocyanate and dimethylene triphenyl triisocyanate, and polyisocyanates obtained by cyanurating diisocyanates.

In the production of the multifunctional urethane (meth)acrylate oligomer, examples of the polyol used in the production of an isocyanate compound may include the compounds that are exemplified as polyhydric alcohols used in the production of the above-described (1) multifunctional polyol meth(acrylate) oligomer.

A specific example of the isocyanate compound obtained by reacting the above polyol with polyisocyanate may be trimethylolpropane toluylene diisocyanate.

The "compound containing active hydrogen and an acryloyloxy group (or a methacryloyloxy group)" used in the production of the multifunctional urethane (meth)acrylate oligomer is a compound containing a hydroxyl group and an acryloyloxy group (or methacryloyloxy group). Specific examples thereof may include 2-hydroxyethyl acrylate and 2-hydroxyethyl methacrylate.

Specific examples of the multifunctional urethane (meth)acrylate oligomer that is particularly preferably used in the present invention may include trimethylolpropane toluylene diisocyanate, and a reaction product of isocyanurate group-containing polyisocyanate with a compound containing active hydrogen and a (meth)acryloyloxy group.

More specific examples of the multifunctional urethane (meth)acrylate oligomer may include, but are not limited to: triacrylate oligomer, trimethacrylate oligomer, diacrylate oligomer, or dimethacrylate oligomer of tris(2-hydroxyethyl)isocyanurate; and triacrylate oligomer, trimethacrylate oligomer, diarylate oligomer, or dimethacrylate oligomer of di(2-hydroxyethyl)mono(2-hydroxyheptane)isocyanurate; and compounds (molecular weight: 1200 or more) containing (meth)acryloyloxy groups at both ends connected by urethane bonds.

As such a multifunctional urethane (meth)acrylate oligomer, a commercially available product can be used. Specific examples of the commercially available product may include UN-3320HC (Negami Chemical Industrial Co., Ltd.), UA-510H (Kyoeisha Chemical Co., Ltd.), CN968 (Sartomer), Eb-220 (Daicel Saitech), U6HA (SHIN-NAKAMURA CHEMICAL CO., LTD.), 7600B (Mitsubishi Chemical Corporation), 7650B (Mitsubishi Chemical Corporation), and 7550B (Mitsubishi Chemical Corporation), but are not limited to these. In the present invention, 6-functional urethane acrylate oligomer can be particularly preferably used.

The hard coat layer may comprise one type of, or two or more types of (meth)acrylate oligomers, which are components (A).

### < Component (B) > [(Meth)acrylate monomer]

In the (meth)acrylate monomer used as a component (B) in the present invention, a (meth)acryloyl group is present as a functional group within the molecule thereof, and the present (meth)acrylate monomer may be a 1-functional monomer or a 2-functional monomer. The upper limit value of the molecular weight of the monomer is less than 200, preferably 190 or less, and more preferably 180 or less. When the monomer molecular weight is 200 or more, there may be a case where adhesion to the high-hardness resin layer is significantly reduced. In addition, the viscosity at 25°C of the monomer is 15 cps or less, preferably 10 cps or less, more preferably 7 cps or less, and particularly preferably 5 cps or less. The viscosity of the monomer can be measured under conditions of 25°C, using the vibration viscometer VM-100A-L, manufactured by SEKONIC CORPORATION.

Examples of the 1-functional monomer having a molecular weight of less than 200 may include (meth)acrylic acid and (meth)acrylic acid ester. Specific examples of the (meth)acrylate monomer may include ethyl (meth)acrylate, cyclohexyl (meth)acrylate, tetrahydrofurfuryl (meth)acrylate, tetrahydrofurfuryl acrylate, benzyl (meth)acrylate, 2-hydroxyethyl (meth)acrylate, 2-hydroxypropyl (meth)acrylate, methyl 2-(allyloxymethyl)acrylate, diethylene glycol monoethyl ether acrylate, and acrylic acid=3,3,5-trimethylcyclohexyl acrylate.

Moreover, specific examples of the 2 functional (meth)acrylate monomer having a molecular weight of less than 200 may include 1,4-butanediol diacrylate and ethylene glycol di(meth)acrylate.

The hard coat layer may comprise one type of, or two or more types of (meth)acrylate monomers, which are components (B).

### < Component (C) > [Photopolymerization initiator]

The photopolymerization initiator may be a monofunctional photopolymerization initiator. Specific examples thereof may include: 4-(2-hydroxyethoxy)phenyl(2-hydroxy-2-propyl)ketone [Darocur 2959, manufactured by Merck]; α-hydroxy-α,α'-dimethylacetophenone [Darocur 1173, manufactured by Merck]; acetophenone-based initiators such as methoxyacetophenone, 2,2'-dimethoxy-2-phenylacetophenone [Irgacure 651, manufactured by BASF Corporation], and 1-hydroxycyclohexylphenyl ketone [Irgacure 184, manufactured by BASF Corporation]; benzoin ether-based initiators such as benzoin ethyl ether and benzoin isopropyl ether; and halogenated ketone, acylphosphinoxide, and acylphosphonate.

### < Component (D) > [Surface modifier]

Surface modifiers are substances that change the surface performance of the hard coat layer, such as a leveling agent, an antistatic agent, a surfactant, a water and oil repellent, inorganic particles, and organic particles.

Examples of the leveling agent may include polyether-modified polyalkylsiloxane, polyether-modified siloxane, polyester-modified hydroxyl group-containing polyalkylsiloxane, polyether-modified polydimethylsiloxane having an alkyl group, modified polyether, and silicone-modified acrylic.

Examples of the antistatic agent may include glycerin fatty acid ester monoglyceride, glycerin fatty acid ester organic acid monoglyceride, polyglycerin fatty acid ester, sorbitan fatty acid ester, a cationic surfactant, and an anionic surfactant.

Examples of the surfactant and the water and oil repellent may include fluorine-containing surfactants and water/oil repellents, such as an oligomer that contains a fluorine group and/or a lipophilic group, and an oligomer that contains a fluorine group, a hydrophilic group, a lipophilic group, and a UV-reactive group.

Examples of the inorganic particles may include silica particles, alumina particles, zirconia particles, and glass particles.

Examples of the organic particles may include acrylic particles and silicone particles.

The hard coat layer may comprise one type of, or two or more types of surface modifiers.

### < Component (E) > [Hue improver]

Hue improver is an agent added to neutralize the yellowness caused by acrylic resins, polycarbonate resins, etc.

As hue improvers described above, anthraquinone-based dyes are generally readily available and are preferable. Specific examples of a bluing agent may include: Solvent Violet 13 (generic name) [CA. No. (Color Index No.) 60725; trade name: "Macrolex Violet B" manufactured by Bayer AG, "DIA RESIN BLUE G" manufactured by Mitsubishi Chemical Corporation, and "Sumiplast Violet B" manufactured by Sumitomo Chemical Co., Ltd.]; Solvent Violet 31 (generic name) [CA. No. 68210; trade name: "DIA RESIN Violet D" manufactured by Mitsubishi Chemical Corporation]; Solvent Violet 33 (generic name) [CA. No. 60725; trade name: "DIA RESIN BLUE J" manufactured by Mitsubishi Chemical Corporation]; Solvent Blue 94 (generic name) [CA No. 61500; trade name: "DIA RESIN BLUE N" manufactured by Mitsubishi Chemical Corporation]; Solvent Violet 36 (generic name) [CA No. 68210; trade name: "Macrolex Violet 3R" manufactured by Bayer AG]; Solvent Blue 97 (generic name) [trade name: "Macrolex Blue RR" manufactured by Bayer AG]; and Solvent Blue 45 (generic name) [CA No. 61110; trade name: "Tetrazole Blue RLS" manufactured by Sandoz], Macrolex Violet and Triazole Blue RLS, manufactured by Ciba Specialty Chemicals.

### [Method of forming hard coat layer]

The method of forming a hard coat layer is not particularly limited. For example, a hard coat layer can be formed by applying a hard coating composition to a layer located below the hard coat layer (e.g., a high-hardness resin layer) and then photopolymerizing it.

The method of applying the hard coating composition (polymerizable composition) is not particularly limited, and a known method can be used. Examples of the method may include a spin coating method, a dipping method, a spraying method, a slide coating method, a bar coating method, a roll coating method, a gravure coating method, a meniscus coating method, a flexographic printing method, a screen printing method, a beat coating method, and a brushing method.

The lamp used for light irradiation in photopolymerization is a lamp having an emission distribution with a wavelength of 420 nm or less. Examples of the lamp may include a low-pressure mercury lamp, a medium-pressure mercury lamp, a high-pressure mercury lamp, an ultra-high-pressure mercury lamp, a chemical lamp, a black light lamp, a microwave-excited mercury lamp, and a metal halide lamp. Among these, the high-pressure mercury lamp or the metal halide lamp is preferable because these lamps efficiently emit a light in the active wavelength range of the initiator, and do not emit much a short-wavelength light that would reduce the viscoelastic properties of the resulting polymer by crosslinking, or a long-wavelength light that would heat and evaporate the reaction composition.

The irradiation intensity of the above-described lamp is a factor for determining the polymerization degree of the resulting polymer and is adjusted appropriately for each desired product performance. When a general cleavage-type initiator having an acetophenone group is used, the irradiation intensity is preferably in the range of 0.1 to 300 mW/cm². In particular, it is preferable to use a metal halide lamp and to set the irradiation intensity to be 10 to 40 mW/cm².

The photopolymerization reaction is inhibited by oxygen in the air or oxygen dissolved in the hard coating composition. Therefore, light irradiation is desirably performed using a method capable of eliminating inhibition of the reaction by oxygen. One of such methods is a method comprising covering the hard coating composition with a polyethylene terephthalate or Teflon film to prevent contact with oxygen, and then irradiating the hard coating composition with a light through the film. Alternatively, the composition may be irradiated with a light through a light-transmitting window in an inert atmosphere in which oxygen is replaced with an inert gas such as nitrogen gas or carbon gas.

When the light irradiation is performed in an inert atmosphere, in order to maintain a low oxygen concentration level in the atmosphere, a constant amount of inert gas is always introduced. This introduction of inert gas generates an airflow on the surface of the hard coating composition, causing monomer evaporation. In order to suppress the level of monomer evaporation, the airflow velocity of inert gas, which is a relative velocity with respect to the velocity of the laminate coated with the hard coating liquid moving through the inert gas atmosphere, is preferably 1 m/sec or less, and more preferably 0.1 m/sec or less. By keeping the airflow velocity within the above-described range, monomer evaporation due to the airflow is substantially suppressed.

For the purpose of improving the adhesion of the hard coat layer, the coating surface may be pretreated in some cases. Examples of the treatment method may include known methods such as a sandblasting method, a solvent treatment method, a corona discharge treatment method, a chromic acid treatment method, a flame treatment method, a hot air treatment method, an ozone treatment method, an ultraviolet treatment method, and a primer treatment method using a resin composition.

The hard coat layer may be further modified. For example, the hard coat layer may be subjected to any one or more of the following treatments: an anti-glare treatment, an anti-reflection treatment, an anti-fouling treatment, an anti-static treatment, a weather resistance treatment, and an AG treatment. These treatments are not particularly limited, and any known method can be used. Examples of the method may include a method of applying a reflection-reducing paint, a method of vapor-depositing a dielectric thin film, and a method of applying an anti-static paint.

Besides, the anti-glare treatment is not particularly limited, and an example of the anti-glare treatment may be a method of using an anti-glare mold. For example, a high-hardness resin layer, a coating film obtained by applying a hard coating composition, and an anti-glare mold are first laminated on one another in this order. Subsequently, the hard coating composition is photopolymerized, and the anti-glare mold is demolded. The photopolymer of the hard coating composition (hard coat layer) will have a shape that reflects the rough surface of the anti-glare mold on the surface contacted with the anti-glare mold. Besides, the material of the anti-glare mold is not particularly limited, as long as it transmits UV light. Glass, transparent resin, etc. can be used as such a material of the anti-glare mold. Other methods of the anti-glare treatment may include a method of adding particles to the hard coating composition, a method of treating the surface of the resulting hard coat layer, and the like. The haze of the hard coat layer can be adjusted by controlling the type of the anti-glare mold used (surface haze, thickness, etc.), and the amount of particles added, etc.

### < Laminated resin sheet for molding >

The pencil hardness of the laminated resin sheet for molding is preferably 2H or higher, more preferably 2H to 4H, and further preferably 3H to 4H. When the pencil hardness is 5H or higher, cracks are generated after thermoforming. Thus, both moldability and hardness can be achieved by setting the pencil hardness to be 2H to 4H. The pencil hardness of a laminated resin sheet for molding means the hardness of the hardest pencil that is measured by pressing a pencil against the surface of the hard coat layer at an angle of 45 degrees with a load of 750 g, while gradually increasing hardness, and is evaluated not to leave a scratch on the surface (pencil scratch hardness test in accordance with JIS K 5600-5-4: 1999).

### < L*, a*, and b* Values and YI Value (Hue evaluation) >

The L*, a* and b* values and YI value of the laminated resin sheet for molding were measured according to a transmission method using the spectrophotometer SE6000 manufactured by NIPPON DENSHOKU INDUSTRIES CO., LTD.

Here, L* indicates brightness, and the greater the value, the higher the whiteness that can be obtained. a* indicates the degree of red-green, with a higher value indicating stronger redness and a lower value indicating stronger greenness. b* indicates the degree of yellow-blue, with a higher value indicating stronger yellowness and a lower value indicating stronger blueness. In addition, YI indicates the yellowness, with a lower value indicating weaker yellowness and better hue. As described in the Examples later, these values are measured in accordance with JIS-K-7373.

Regarding L*, if L* is below 70, the whiteness decreases and the brightness decreases. It is more preferable to satisfy L* ≥ 80, further preferable to meet L* ≥ 85, and particularly preferable to satisfy L* ≥ 90.

Regarding a*, if a* is below -0.8, the color becomes greenish, and if it exceeds 0.4, the color becomes reddish. It is more preferable to satisfy -0.6 ≤ a* ≤ 0.3, further preferable to satisfy -0.4 ≤ a* ≤ 0.1, and particularly preferable to satisfy -0.3 ≤ a* ≤ 0.08.

Regarding b*, if b* is below -0.2, the color becomes blueish, and if it exceeds 0.7, the color becomes yellowish. It is more preferable to satisfy -0.12 ≤ b* ≤ 0.6, further preferable to satisfy -0.1 ≤ b* ≤ 0.5, and particularly preferable to satisfy 0 ≤ b* ≤ 0.5.

Regarding YI, If the YI value is below -0.5, the color becomes blueish, and if it exceeds 1.2, the color becomes yellowish. It is more preferable to satisfy -0.2 ≤ YI ≤ 1.15, further preferable to satisfy 0 ≤ YI ≤ 1, and particularly preferable to satisfy 0.03 ≤ YI ≤ 1.

### < Molded product >

According to one embodiment of the present invention, there is provided a molded product that is molded using the aforementioned laminated resin sheet for molding.

The molding method is not particularly limited, and thermoforming is suitable because of the characteristics of the laminated resin sheet for molding. Thermoforming can be carried out by a method that has been commonly used in the present technical field. Specific examples of the thermoforming method may include hot press molding, pressure forming, vacuum forming, and TOM molding.

The molding temperature is preferably 100°C to 200°C.

### Examples

Hereinafter, the examples of the present invention will be described. However, the present invention is not limited to the aspects of the examples.

For Examples below, the following materials were used as a methacrylic resin (C-1) and a styrene copolymer (D-1), but the materials are not limited thereto.
Methacrylic resin (C-1): ALTUGLAS^{®} V020 manufactured by Arkema K.K. (weight average molecular weight: 127,000, glass transition temperature: 134°C, melt flow rate at 230°C under a load of 3.8 kg: 1.8 g/10 min, refractive index: 1.49, and mm/mr/rr = 7.4 mol %/37.4 mol %/55.2 mol %)
Styrene copolymer (D-1): XIBOND 160 manufactured by Polyscope ((d1)/(d2) = styrene/maleic anhydride = 78% by mass/22% by mass, weight average molecular weight: 69,500, glass transition temperature: 143°C, melt flow rate at 230°C under a load of 3.8 kg: 7.6 g/10 min, refractive index 1.58 (corresponding to resin (B6))

The following materials were used as components constituting the hard coating composition, and these materials were used to obtain the mixing ratio (part by mass) as shown in Table 1 below.
CN968NS (component (A)): 6-Functional urethane acrylate oligomer, manufactured by Sartomer
7600B (component (A)): 6-Functional urethane acrylate oligomer, manufactured by Mitsubishi Chemical Corporation
AOMA (component (B)): Methyl 2-(allyloxymethyl)acrylate (1-functional) represented by the following structural formula, manufactured by Nippon Shokubai Co., Ltd.
   Molecular weight: 156.2
   Viscosity (25°C): 2 cps 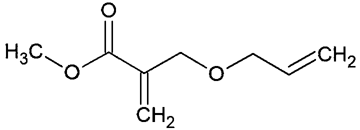
THF-A (component (B)): Tetrahydrofurfuryl acrylate (1 functional) represented by the following structural formula, manufactured by Osaka Organic Chemical Industry Ltd.
   Molecular weight: 156.2
   Viscosity (25°C): 3 cps 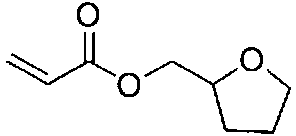
Irgacure184 (component (C)): 1-Hydroxycyclohexyl phenyl ketone, manufactured by BASF Corporation,
RS-90 (component (D)): Oligomer containing a fluorine-containing group, a hydrophilic group, a lipophilic group and an UV-reactive group, manufactured by DIC Corporation
Solvent Blue 94 ((E) component): [CA. No. 61500; trade name: "DIA RESIN BLUE N" manufactured by Mitsubishi Chemical Corporation]

### < Measurement of adhesion of laminated resin sheet for molding (hard coat layer) >

In accordance with JIS-K5400-5-6, 25 squares were cut with a cutter blade, six lines vertically and six lines horizontally at 1 mm intervals. Nichiban cellophane tape was firmly adhered to the squares and was then peeled off at a 60° angle towards the front direction. A case where no coating film was peeled off, the case was set to be a pass (o), and a case where even one square was peeled off, the case was set to be a fail (x).

### < Measurement of scratch resistance of laminated resin sheet for molding (hard coat layer) >

Scratch resistance: A #0000 steel wool was used to make 15 passes and returns with a load of 100 g/cm². Those with less than five scratches were set to be a pass (o), and those with five or more scratches were set to be a fail (x).

### < Measurement of pencil hardness of laminated resin sheet for molding (hard coat layer) >

The laminated resin sheets for molding produced in the Examples and Comparative Examples were evaluated by a pencil scratch hardness test in accordance with JIS K 5600-5-4: 1999. Pencils were pressed against the surface of the hard coat layer at an angle of 45 degrees with a load of 750 g, while gradually increasing hardness, and the hardest pencil that did not leave a scratch was evaluated as a pencil hardness. A hardness of 2H or higher was considered to be a pass.

### < Measurement of elastic deformation percentage and Martens hardness of laminated resin sheet for molding (hard coat layer) >

The elastic deformation percentage and the Martens hardness of the hard coat layer were measured using HM2000 LT manufactured by Fischer. Measuring conditions are as follows.
Maximum load: 3 mN
Retention time at reaching maximum load: 5 seconds
Loading rate and unloading rate: 10 mN/sec

### < Measurement of color difference of laminated resin sheet for molding >

Using the spectrophotometer SE6000 manufactured by NIPPON DENSHOKU INDUSTRIES CO., LTD., the laminated resin sheet for molding was measured for a*, b*, L*, and YI (ASTM: E313) in accordance with JIS-K-7373 under the following conditions:
Light source: D65
Measurement method: Transmittance

### < Evaluation of presence or absence of crack generation (moldability) of hard coat layer >

The laminated resin sheets for molding produced in the Examples and Comparative Examples were subjected to thermoforming, and the presence or absence of cracks was checked for each of the 50 mmR portion, 75 mmR portion or 100 mmR portion. Those for which no crack generation was visually confirmed were set to be a pass (o), and those for which crack generation was confirmed were set to be a fail (x).

### < Example 1 >

### [Production of pellets of high-hardness resin (B-1)]

With respect to a total of 100 parts by mass consisting of 50 parts by mass of the above methacrylic resin (C-1) and 50 parts by mass of the above styrene copolymer (D-1), 500 ppm of the phosphorus additive PEP-36 (manufactured by ADEKA Corporation) and 0.2% by mass of stearic acid monoglyceride (product name: H-100, manufactured by Riken Vitamin Co., Ltd.) were added. After mixing them for 20 minutes with a blender, the mixture was melt-kneaded at a cylinder temperature of 240°C, using a twin-screw extruder having a screw diameter of 26 mm (Toshiba Machine Co., Ltd., TEM-26SS, L/D ≒ 40) that was equipped with a polymer filter with a mesh size of 10 µm. The extruded strands were pelletized using a pelletizer. The pellets of the high-hardness resin (B-1) could be stably produced.

The appearance of the high-hardness resin (B-1) pellets was good (o) (transparent), and had a glass transition temperature of 121°C, a melt flow rate at a temperature of 230°C under a load of 3.8 kg of 2.5 g/10 min, and a refractive index of 1.54.

### (Production of laminated resin sheet for molding)

A laminate consisting of a base material layer and a high-hardness resin layer was formed using a multilayer extrusion device equipped with a single-screw extruder with a 35 mm shaft diameter, a single-screw extruder with a 65 mm shaft diameter, a feedblock connected to each extruder, and a T-die connected to the feedblock.

Specifically, the high-hardness resin (B-1) obtained above was continuously introduced into the single-screw extruder with a 35 mm shaft diameter and was extruded under conditions of a cylinder temperature of 230°C and a discharge rate of 2.6 kg/h. Also, the polycarbonate resin (Iupizeta T-1380; manufactured by MITSUBISHI GAS CHEMICAL COMPANY, INC., Tg: 125°C, weight average molecular weight (Mw): 44,500) was continuously introduced into the single-screw extruder with a 65 mm shaft diameter and was extruded under conditions of a cylinder temperature of 240°C and a discharge rate of 50.0 kg/h.

The extruded high-hardness resin and polycarbonate resin were introduced into a feedblock equipped with two-type, two-layer distributor pins, and the high-hardness resin and polycarbonate resin were laminated on each other at a temperature of 240°C. The resulting laminate was further introduced into the T-die at a temperature of 240°C and was extruded into a sheet. The sheet was then cooled while transferring a mirror surface using three mirror-finishing rolls set at temperatures of 120°C, 130°C and 190°C from the upstream side, so as to obtain a laminate consisting of a high-hardness resin layer and a polycarbonate resin layer (base material layer). The thickness of the laminate was 2.0 mm, and the thickness of the high-hardness resin layer was 60 µm near the center.

On the high-hardness resin layer side of the laminate obtained above, a cured coating film (hard coat layer) was formed on the above-described high-hardness resin layer according to the following procedures using each hard coating composition prepared with composition (part by mass) shown in Table 1 below, so as to obtain each laminated resin sheet for molding.

The prepared hard coating composition was placed on the laminate consisting of a high-hardness resin layer and a polycarbonate resin layer (base material layer) heated in a hot air circulation dryer set at 100°C, and was then drawn using a bar coater so that the thickness of the cured coating film would be 5 to 10 µm. A 100 µm-thick PET film was placed on thereon, and was then leveled with a hand roller. This resultant was irradiated with an ultraviolet light using a metal halide lamp with an output density of 120 W/cm at a position 14 cm below the light source at a conveyor speed of 1.0 m/min, so as to form a cured coating film (hard coat layer). After curing, the PET film was peeled off, so that a laminated sheet having the cured coating film of the hard coating composition was obtained.

### (Production of molded body)

The laminated resin sheet for molding produced above was hot-pressed to produce a molded body. It is to be noted that the hot press machine used was driven by clamping mechanism using a servomotor, and that the maximum clamping force was set to be 3000 kgf at this time.

The laminated resin sheet for molding produced above was placed in a tray dryer set to 120°C and was preheated for 3 minutes. The temperature of the sheet removed from the tray dryer was 80°C.

After removing the laminated resin sheet for molding from the tray dryer, it was placed in the lower mold of an aluminum-made hot press mold (Figure 1) within 50 seconds.

The laminated resin sheet for molding was subjected to hot press molding in the aluminum hot press mold (Figure 1) with a clearance (the gap between the upper and lower molds that sandwich the molding sheet) of 2 mm and a curvature radius R of lower mold of 50 mm. The temperature of both the upper and lower molds was 120°C, the clamping force was 200 kgf, and the pressing time was 3 minutes.

The laminated resin sheets for molding after the molding were evaluated in terms of the presence or absence of crack generation in the hard coat layer.

The evaluation results of the obtained laminated resin sheets for molding are shown in Table 2 below. The laminated resin sheets for molding of Examples 1 to 5 satisfied all performance items. On the other hand, the laminated resin sheets for molding of Comparative Examples 1 to 3 did not satisfy some performance item, and thus, the comprehensive judgement was a fail.

**[Table 1]**

| | CN968NS | 7600B | AOMA | THF-A | Irgacure 184 | Fluorine additive | Hue improver |
|---|---|---|---|---|---|---|---|
| | Component (A) | Component (A) | Com ponent (B) | Component (B) | Com ponent (C) | Component (D) | Component (E) |
| Example 1 | 60 | | | 40 | 3 | 2.5 | 0.005 |
| Example 2 | | 70 | 30 | | 3 | 2.5 | 0.005 |
| Example 3 | 70 | | 30 | | 3 | 2.5 | 0.005 |
| Example 4 | 70 | | 30 | | 3 | 2.5 | 0.01 |
| Example 5 | 70 | | 30 | | 3 | 2.5 | 0.015 |
| Comp.Ex. 1 | 70 | | 30 | | 3 | 2.5 | 0 |
| Comp.Ex. 2 | 70 | | 30 | | 3 | 2.5 | 0.025 |
| Comp.Ex. 3 | 70 | | 30 | | 3 | 2.5 | 0.03 |

**[Table 2]**

| | Hard coating | | | | | | | | | |
|---|---|---|---|---|---|---|---|---|---|---|
| | After curing of composition | | | | | | | | | |
| | Adhesion | Pencil hardness | Scratch resistance | Moldability at 120°C | Martens hardness (N/mm²) | Elastic deformation percentage (%) | a* | b* | L* | Y1 |
| Example 1 | ○ | ○ | ○ | ○ | 180 | 55.0 | 0.07 | 0.47 | 96.21 | 0.73 |
| Example 2 | ○ | ○ | ○ | ○ | 177 | 50.4 | 0.07 | 0.47 | 96.20 | 0.76 |
| Example 3 | ○ | ○ | ○ | ○ | 161 | 51.8 | 0.07 | 0.47 | 96.22 | 0.74 |
| Example 4 | ○ | ○ | ○ | ○ | 159 | 51.5 | -0.22 | 0.37 | 96.16 | 0.55 |
| Example 5 | ○ | ○ | ○ | ○ | 162 | 51.7 | -0.23 | 0.12 | 96.04 | 0.07 |
| Comp.Ex. 1 | ○ | ○ | ○ | × | 161 | 51.7 | -0.18 | 0.70 | 96.36 | 1.2 |
| Comp.Ex. 2 | ○ | ○ | ○ | × | 160 | 51.6 | -0.26 | -0.14 | 95.95 | -0.46 |
| Comp.Ex. 3 | ○ | ○ | ○ | × | 162 | 51.7 | -0.30 | -0.33 | 95.59 | -0.86 |

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the scope of the inventions recited in the claims and the equivalents thereof.

## Claims

1. A laminated resin sheet for molding, comprising:
a high-hardness resin layer comprising a high-hardness resin,
a base material layer comprising a polycarbonate resin (a1), disposed on one side of the high-hardness resin layer and
a hard coat layer, disposed on the other side of the high-hardness resin layer, wherein
the hard coat layer has a Martens hardness of 100 to 250 (N/mm²) and an elastic deformation percentage of 40% to 64%,
the hard coat layer consists of a hard coating composition, comprising:
(A) a 2 to 15 functional (meth)acrylate oligomer,
(B) a 1 or 2 functional (meth)acrylate monomer, having a molecular weight of less than 200 and a viscosity at 25°C of 15 cps or less,
(C) a photopolymerization initiator,
(D) a surface modifier, and
(E) a hue improver, and
the content of the hue improver (E) is 0.002 to 0.020 parts by mass, with respect to 100 parts by mass of a total of the component (A) and the component (B).

2. The laminated resin sheet for molding according to claim 1, wherein values of L* and YI measured in accordance with JIS-K-7373 are L* ≥ 90 and 0 ≤ YI ≤ 1, respectively.

3. The laminated resin sheet for molding according to claim 1 or 2, wherein values of a* and b* measured in accordance with JIS-K-7373 are -0.4 ≤ a* ≤ 0.1 and -1 ≤ b* ≤ 0.5, respectively.

4. The laminated resin sheet for molding according to any one of claims 1 to 3, wherein the polycarbonate resin (a1) is an aromatic polycarbonate resin.

5. The laminated resin sheet for molding according to claim 4, wherein the aromatic polycarbonate resin comprises a constituent unit represented by the following formula (3a):

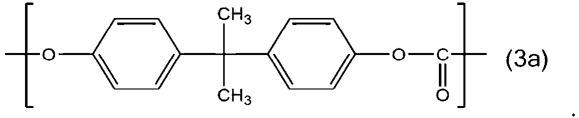

6. The laminated resin sheet for molding according to any one of claims 1 to 5, wherein a content of the polycarbonate resin (a1) is 75% to 100% by mass, with respect to a total mass of the base material layer.

7. The laminated resin sheet for molding according to any one of claims 1 to 6, wherein a content of the high-hardness resin is 70% to 100% by mass, with respect to a total mass of the high-hardness resin layer.

8. The laminated resin sheet for molding according to any one of claims 1 to 7, wherein a total thickness of the base material layer and the high-hardness resin layer is 0.5 to 3.5 mm.

9. The laminated resin sheet for molding according to any one of claims 1 to 8, wherein a percentage of a thickness of the base material layer to a total thickness of the base material layer and the high-hardness resin layer is 75% to 99%.

10. The laminated resin sheet for molding according to any one of claims 1 to 9, wherein a pencil hardness of a surface of the hard coat layer is 2H or more.

11. A molded product molded using the laminated resin sheet for molding according to any one of claims 1 to 10.
